# EUROPÄISCHE PATENTSCHRIFT

(11) **EP 0 969 008 B1**
(45) Veröffentlichungstag und Bekanntmachung des Hinweises auf die Patenterteilung: **27.08.2003**
(21) Anmeldenummer: 99110828.3
(22) Anmeldetag: 05.06.1999
(51) Int. Cl.: C07F 9/32, C07F 9/48

(54) **Verfahren zur Herstellung von Phosphinsäureestern**
Process for the preparation of phosphinic acids esters
Procédé pour la préparation d'esters d'acides phosphiniques

(30) Priorität: 29.06.1998 DE 19828863
(43) Veröffentlichungstag der Anmeldung: 05.01.2000
(73) Patentinhaber: Clariant GmbH, 65929 Frankfurt am Main (DE)
(72) Erfinder: Hörold, Sebastian, Dr., 50374 Erftstadt (DE); Weferling, Norbert, Dr., 50354 Hürth (DE); Breuer, Heinz-Peter, 50354 Hürth (DE)

(56) Entgegenhaltungen:
- EP-A- 0 011 245
- US-A- 2 957 931
- E.E. NIFANT'EV: "Acid catalysis in the hydrophosphorylation of olefins" JOURNAL OF GENERAL CHEMISTRY USSR., Bd. 50, Nr. 8/1, - August 1980 (1980-08) Seiten 1416-1423, XP002093427 NEW YORK US
- E.E. NIFANT'EV: "Hydrophosphorylation of cyclopentenes" JOURNAL OF GENERAL CHEMISTRY USSR., Bd. 61, Nr. 1/1, - Januar 1991 (1991-01) Seiten 83-92, XP002093428 NEW YORK US

## Beschreibung

Die vorliegende Erfindung betrifft ein Verfahren zur Herstellung von Phosphinsäureestern sowie die Verwendung der nach diesem Verfahren hergestellten Phospinsäureester.

Phosphinsäureester stellen wertvolle Synthesebausteine dar und können beispielsweise für die Herstellung von Polymeren und Kunststoffen verwendet werden, um schwerentflammbare Materialien zu erhalten.

So beschreibt die DE 26 52 007 A1 schwerentflammbare Epoxidharze durch Einbau carboxyfunktioneller Phosphinsäuren. Die US 5,399,428 A1 beschreibt flammwidrige lineare Polyester durch Einbau von carboxyfunktionellen Phosphinsäuren.

Die DE 25 40 283 A1 beschreibt die Addition von Phosphinen an α,β-ungesättigte Carbonsäuren in Gegenwart wäßriger Salzsäure und anschließender Oxidation.

Die DE 28 49 003 beschreibt die Herstellung phosphorhaltiger Cyanhydrinderivate durch Addition von Phosphonigsäurestern an Acroleincyanhydrinderivate.

Phosphinsäureester werden erhalten, wenn man Phosphonigsäuremonoester in Gegenwart peroxidischer Katalysatoren an 1-Olefine addiert. Die Ausbeuten sind aber nur gering. Die Addition von Phosphonigsäuremonoestern an aktivierte Doppelbindungen in Gegenwart von Alkoholaten als Katalyxsator verläuft besser. Als ungesättigte Verbindungen eignen sich α,β-ungesättigte Carbonsäurester oder -nitrile, α,β-ungesättigte Ketone sowie Alkyl-vinyl-sulfone und Essigsäurevinylester (Houben-Weyl, Band 12/1, S. 258-259).

Die Phosphonigsäuremonoester selbst werden aus Phosphonigsäuredihalogeniden durch Umsetzung mit Alkoholen oder durch Hydrolyse und anschließende Veresterung hergestellt.

Funktionelle Phosphinsäuren werden erhalten, in dem man Phosphonigsäure-dihalogenide (Dihalogenphosphine) mit aktivierten olefinischen Verbindungen wie z.B. Acrylsäure- oder Methacrylsäurederivaten umsetzt und anschließend hydrolysiert (Houben-Weyl, Band 12/1, S. 230; K.K. Khairullin, T.I. Sobchuk, A.N. Pudovik, Zh. Obshch. Khim. 37, 710 (1967)). Als Nebenprodukte fallen bei der Hydrolyse mit organischen Säuren deren Halogenide an.

Darüber hinaus können auch Phosphonigsäure-dihalogenide mit Alkylhalogeniden in Gegenwart von Aluminiumchlorid umgesetzt werden (Houben-Weyl, Band 12/1, S. 232). Phosphinsäureester können auch aus Phosphonigsäuredialkylestern durch Michaelis-Arbuzov-Reaktion hergestellt werden. Phosphonigsäuredialkylester wiederum werden aus Phosphonigsäuredihalogeniden und Hydroxyverbindungen hergestellt.

Die vorgenannten, als Edukte für andere Synthesen einsetzbaren Phosphonigsäure-dihalogenide, z.B. Methyldichlorphosphin, werden selbst bisher in einer aufwendigen Synthese aus Phosphortrihalogeniden und Alkylhalogeniden in Gegenwart von Aluminiumchlorid hergestellt (Houben-Weyl, Band 12/1, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig und/oder korrosiv, also höchst unerwünscht, sind.

Es besteht daher ein Bedarf an Verfahren zur Herstellung von Phosphinsäureestern, welches auf einfache Art und Weise durchführbar ist und bei dem einheitliche Produkte in hoher Ausbeute erhalten werden. Auch sollte ein solches Verfahren den bisher bekannten umwelttechnisch deutlich überlegen sein.

Der Erfindung liegt somit die Aufgabe zugrunde, ein Verfahren zur Herstellung von Phosphinsäureestern zur Verfügung zu stellen, das die vorgenannten Nachteile vermeidet und von elementarem gelbem Phosphor als Edukt ausgeht.

Diese Aufgabe wird gelöst durch ein Verfahren der eingangs beschriebenen Art, dadurch gekennzeichnet, daß man
a) elementaren gelben Phosphor mit Alkylhalogeniden in Gegenwart von Alkali- oder Erdalkalihydroxid zu einem Gemisch, welches als Hauptbestandteile die Alkali- und/oder Erdalkalisalze der Alkylphosphonigen, Phosphorigen und Hypophosphorigen Säure enthält, umsetzt
b) aus dem nach a) erhaltenen Gemisch die Alkylphosphonige Säure entfernt
c) die Alkylphosphonige Säure verestert
d) den so erhaltenen Ester der Alkylphosphonigen Säure an eine Verbindung mit mindestens einer C=C-Doppelbindung addiert.

Das erfindungsgemäße Verfahren weist gegenüber den bisher bekannten Verfahren erhebliche Vorteile auf, da es u.a. Phosphonigsäure-dihalogenide als Edukte vermeidet und auch in der Produktverteilung eine positive Bilanz aufweist.

Bevorzugt werden als Alkylhalogenide Methylchlorid oder Methylbromid verwendet.

Bevorzugt wird die Reaktion im Schritt a) in einem Zwei-Phasen-System aus wäßrigem Alkali- oder Erdalkalihydroxid oder Gemischen davon und einem organischen Lösungsmittel durchgeführt.

Bevorzugt werden als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet.

Besonders bevorzugt wird als organisches Lösungsmittel Toluol, allein oder in Kombination mit Alkoholen, verwendet.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion -20 bis +60 °C.

Besonders bevorzugt beträgt die Temperatur 0 bis 30 °C.

Bevorzugt wird die Reaktion unter einem Druck von 0 bis 10 bar durchgeführt.

Bevorzugt wird das erfindungsgemäße Verfahren so ausgeführt, daß man den gelben Phosphor in einem Lösungsmittel oder einem Lösungsmittelgemisch suspendiert und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt wird im Schritt b) die Alkylphosphonige Säure destillativ entfernt.

Bevorzugt wird im Schritt c) mittels Oxethylierung verestert.

Bevorzugt wird zur Oxethylierung nach Schritt c) ein Oxiran wie Ethylenoxid, Propylenoxid oder längerkettige Oxirane verwendet Alternativ kann auch Ethylencarbonat verwendet werden. Es kann aber auch mit einem Alkohol unter Wasserabspaltung direkt verestert werden.

Die Veresterung der phosphonigen Säure zum entsprechenden Monoester kann beispielsweise durch Umsetzung mit höhersiedenen Alkoholen unter Entfernung des gebildeten Wassers durch Azeotropdestillation erreicht werden.

Als Alkohole sind beispielsweise Butanol, Hexanol, Octanol, Ethylhexanol, Ehtylenglycol, Diethylenglycol und/oder Glycerin geeignet.

Bevorzugt wird im Schritt d) in Anwesenheit von Katalysatoren addiert.

Bevorzugt handelt es sich dabei um basische Katalysatoren. Alternativ können auch Säuren oder Radikalstarter eingesetzt werden.

Bevorzugt handelt es sich bei den basischen Katalysatoren um Alkali- und/oder Erdalkalialkoholate.

Unter den in Schritt d) genannten Verbindungen mit mindestens einer C=C-Doppelbindung sind insbesondere die Olefine zu nennen.

Bevorzugt handelt es sich bei den Olefinen um lineare oder verzweigte α-Olefine. Bevorzugt handelt es sich bei den α-Olefinen um Ethylen, n-, i-Propylen, n-, i-Buten, n-, i-Penten, n-, i-Hexen, n-, i-Octen, 1-Decen, 1-Dodecen, 1-Tetradecen, 1-Hexadecen, n-Eicosen, und/oder 2,4,4-Tri-methylpenten-Isomerengemisch.

Als Olefine sind Verbindungen der allgemeinen Formel 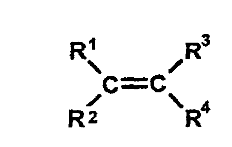 in der R¹-R⁴ gleich oder verschieden sein können und für Wasserstoff, eine Alkylgruppe mit 1 bis 18 C-Atomen, für Phenyl, Benzyl oder alkylsubtituierte Aromaten stehen, geeignet.

Geeignet sind ebenfalls Cycloolefine der Formel 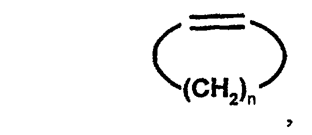 insbesondere Cyclopenten, Cyclohexen, Cycloocten und Cyclodecen.

Eingesetzt werden können auch offenkettige Diene der Formel 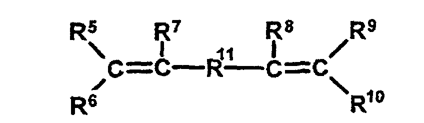 in der R⁵ - R¹⁰ gleich oder verschieden sind und für Wasserstoff oder eine C₁ bis C₆-Alkylgruppe stehen und R¹¹ für (CH₂)ₙ mit n=0 bis 6 steht. Bevorzugt sind hierbei Butadien, Isopren und 1,5-Hexadien.

Als Cyclodiene sind 1,3 Cyclopentadien, Dicyclopentadien und 1,5-Cyclooctadien sowie Norbornadien bevorzugt.

Bevorzugt werden als Olefine solche mit innenständiger Doppelbindung, cyclische oder offenkettige Diene und/oder Polyene mit 4 bis 20 Kohlenstoffatomen eingesetzt.

Bevorzugt tragen die Olefine eine funktionelle Gruppe.

Bevorzugt handelt es sich bei den Olefinen mit funktionellen Gruppen um α,β-ungesättigte Carbonsäurester, -amide oder -nitrile, α,β-ungesättigte Ketone sowie Alkyl-vinyl-sulfone und Essigsäurevinylester.

Bevorzugt handelt es sich bei den Olefinen mit funktionellen Gruppen um α,β-ungesättigte Carbonsäureester aliphatischer oder cycloaliphatischer Alkohole mit 1 bis 20 C-Atomen oder um Carbonsäure- ester mehrwertiger Alkohole mit 2 bis 4 Hydroxylgruppen und 2 bis 20 C-Atomen.

Bevorzugt handelt es sich bei den Olefinen mit funktionellen Gruppen um Derivate der Acrylsäure nach der allgemeinen Formel (I), 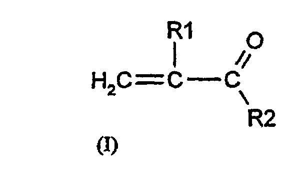 wobei R1 CH₃ oder H und R2 eine Estergruppe ein- oder mehrwertiger Alkohole mit 1-12 C-Atomen oder eine Amingruppe bedeutet.

Bevorzugt handelt es sich bei den Olefinen mit funktionellen Gruppen um Acroleincyanhydrin-Verbindungen nach Formel (II) 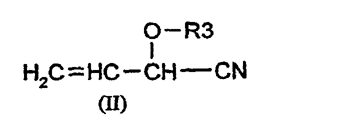 mit R3 = Acetyl oder Propionyl.

Bevorzugt handelt es sich bei den Olefinen mit funktionellen Gruppen um Itaconsäurederivate der allgemeinen Formel (III) mit R' = Alkylgruppe mit 1-12 C-Atomen.

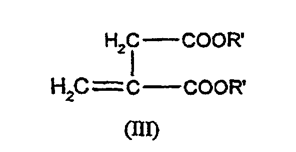

Bevorzugt handelt es sich bei dem Olefin mit funktioneller Gruppe um Hydroxyethylacrylat, Acrylsäuremethylester, Acrylsäureethylester, Hydroxyethylmethacrylat, Methacrylsäuremethylester, Methacrylsäureethylester, Itaconsäuredimethylester, Itaconsäurediethylester oder Acroleincyanhydrinacetat.

Bevorzugt handelt es sich bei dem Olefin mit funktioneller Gruppe um Hydroxyethylacrylat oder Hydroxyethylmethacrylat.

Bevorzugt handelt es sich bei der Alkylphosphonigen Säure um Methanphosphonige Säure.

Die Erfindung betrifft auch die Verwendung der nach dem erfindungsgemäßen Verfahren hergestellten Phosphinsäureester als reaktive Flammschutzmittel für Polymere.

Die Erfindung betrifft auch die Verwendung der nach dem erfindungsgemäßen Verfahren hergestellten Phosphinsäureester als reaktive Flammschutzmittel für thermoplastische Polymere wie Polyethylenterephthalat, Polybutylenterephthalat oder Polyamid.

Die Erfindung betrifft auch die Verwendung der nach dem erfindungsgemäßen Verfahren hergestellten Phosphinsäureester als reaktive Flammschutzmittel für duroplastische Harze wie ungesättigte Polyesterharze, Epoxidharze, Polyurethane oder Acrylate.

Die Erfindung betrifft auch die Verwendung der nach dem erfindungsgemäßen Verfahren hergestellten Phosphinsäureester als Vorprodukte zur chemischen Synthese von anderen, phosphorhaltigen Verbindungen.

Die Erfindung wird durch die nachstehenden Beispiele erläutert:

### Beispiel 1: Umsetzung von gelbem Phosphor mit Alkylhalogenid

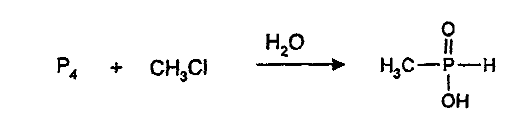

In einem 5 1-Edelstahl-Druckreaktor werden 21 Toluol, in dem vorher 25 g (0,05 mol) Tributylhexadecylphosphoniumbromid gelöst worden waren, vorgelegt und auf 60 °C vorgeheizt. Es werden 62 g (2 mol) geschmolzener gelber Phosphor in den Reaktor eingetragen, unter starkem Rühren auf 0 °C abgekühlt und dann 202 g (4 mol) Methylchlorid einkondensiert. Danach werden innerhalb von 1 h 1000 g einer Lösung von 600 g KOH in 400 g Wasser eingetragen, dabei die Temperatur auf 0 °C gehalten und noch 1 h bei dieser Temperatur nachreagiert. Das Produktgemisch wird auf Raumtemperatur erwärmt, mit 400 ml Wasser verdünnt und anschließend der Reaktor über eine Verbrennung entspannt.
Man erhält zwei Phasen. Die wäßrige Phase enthält 64,2 Mol% Methanphosphonige Säure in Form ihres Kalisalzes. Nach Neutralisieren mit Salzsäure wurde die Methanphosphonige Säure im Vakuum abdestilliert.

### Beispiel 2: Oxethylierung von Methanphosphonigsäure

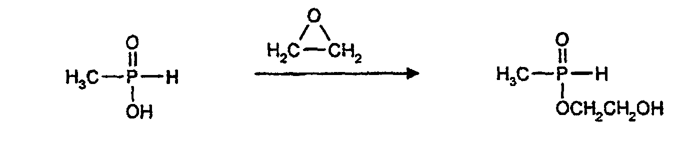

In einem 500 ml-Fünfhalskolben mit Gaseinleitungsrohr, Thermometer, Intensivrührer und Rückflußkühler mit Gasverbrennung werden 80,3 g (1 mol) Methanphosphonige Säure vorgelegt. Bei Raumtemperatur wird Ethylenoxid eingeleitet Unter Kühlung wird eine Reaktionstemperatur von 70°C eingestellt. Nach beendeter Ethylenoxidaufnahme wird noch eine Stunde bei 80 °C nachreagieren lassen. Die Ethylenoxidaufnahme beträgt 65,7 g entsprechend 1,5 mol. Die Säurezahl des Produktes ist kleiner 1 mg KOH/g. Es wird ein farbloses, wasserklares Produkt erhalten. ³¹P-NMR: 38 ppm

### Beispiel 3:

Addition von Methanphosphonigsäurehydroxyethylester an Acrylsäurehydroxyethylester

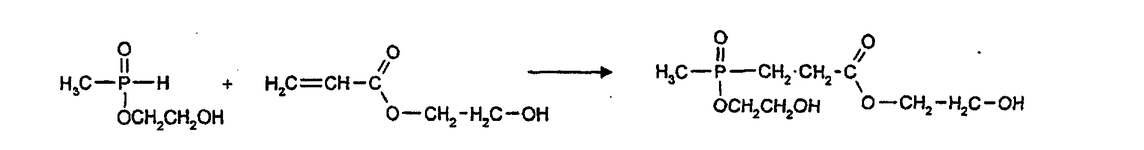

In einem 500 ml-Fünfhalskolben mit Thermometer, Rückflußkühler, Intensivrührer und Tropftrichter werden 67 g (0,46 mol) Methanphosphonigsäurehydroxyethylester und 53,2 g Acrylsäurehydroxiethylester vorgelegt. Unter Rühren werden 25 ml Natriummethylat (30 %) in der Geschwindigkeit dazugetropft, daß sich eine Reaktionstemperatur von 60 °C einstellt. Anschließend wird noch 10 min bei 80 °C nachreagieren lassen. Es wird eine schwach gelb gefärbte Flüssigkeit erhalten. Der Phosphorgehalt beträgt 11,0 %, der Kohlenstoffgehalt 40,3 % und die Hydroxylzahl beträgt 148 mg/g. ³¹P-NMR (CHCl₃): 64 ppm

### Beispiel 4: Addition von Methanphosphonigsäurehydroxyethylester an Acrylamid

In einem 500 ml-Fünfhalskolben mit Thermometer, Rückflußkühler, Intensivrührer und Tropftrichter werden 65 g (0,445 mol) Methanphosphonigsäurehydroxyethylester und 31,6 g Acrylamid vorgelegt. Unter Rühren werden 40 ml Natriummethylat (30 %) in einer solchen Geschwindigkeit dazugetropft, daß sich eine Reaktionstemperatur von 80 °C einstellt Anschließend wird noch 10 min bei 80 °C nachreagieren lassen. Es wird eine schwach gelb gefärbte Flüssigkeit erhalten. ³¹P-NMR (CHCl₃): 55 ppm

### Beispiel 5: Addition von Methanphosphonigsäurehydroxyethylester an Acrylnitril

In einem 500 ml-Fünfhalskolben mit Thermometer, Rückflußkühler, Intensivrührer und Tropftrichter werden 81,6 g (0,559 mol) Methanphosphonigsäurehydroxyethylester und 37,4 g Acrylnitril vorgelegt. Unter Rühren werden 40 ml Natriummethylat (30 %) in einer solchen Geschwindigkeit dazugetropft, daß sich eine Reaktionstemperatur von 70 °C einstellt.

Anschließend wird noch 10 min bei 80 °C nachreagieren lassen. Es wird eine schwach gelb gefärbte Flüssigkeit erhalten. ³¹P-NMR (CHCl₃): 53-54 ppm

### Beispiel 6:

### Addition von Methanphosphonigsäurehydroxyethylester an Acrylsäuremethylester

In einem 500 ml-Fünfhalskolben mit Thermometer, Rückflußkühler, Intensivrührer und Tropftrichter werden 73 g (0,445 mol) Methanphosphonigsäurehydroxyethylester und 43 g Acrylsäuremethylester vorgelegt. Unter Rühren werden 40 ml Natriummethylat (30 %) in einer solchen Geschwindigkeit dazugetropft, daß sich eine Reaktionstemperatur von 80 °C einstellt.
Es wird eine schwach gelb gefärbte Flüssigkeit erhalten. ³¹P-NMR (CHCl₃): 58 ppm

### Beispiel 7:

### Addition von Methanphosphonigsäurehydroxyethylester an Itaconsäuredimethylester

In einem 500 ml-Fünfhalskolben mit Thermometer, Rückflußkühler, Intensivrührer und Tropftrichter werden 43,8 g (0,3 mol) Methanphosphonigsäurehydroxyethylester und 47,4 g Itaconsäuredimethylester (0,3 mol) vorgelegt. Unter Rühren werden 3 ml Natriummethylat (30 %) in einer solchen Geschwindigkeit dazugetropft, daß sich eine Reaktionstemperatur von max. 90 °C einstellt. Anschließend wird noch 1 h bei 50-70 °C nachreagieren lassen.
Es wird eine schwach gelb gefärbte Flüssigkeit erhalten. ³¹P-NMR (CHCl₃): 55-56 ppm

### Beispiel 8: Umsetzung von Methanphosphonigsäure mit n-Butanol

In einem 250 ml-Dreihalskolben mit Thermometer, Wasserabscheider und Intensivrührer werden 43,8 g (0,3 mol) Methanphosphonigsäurehydroxyethylester und 37,1 g n-Butanol (0,5 mol) vorgelegt. Bei einer Reaktionstemperatur von 90-110 °C wird das gebildete Wasser durch Azeotropdestillation entfernt. Das Produkt wird anschließend durch Destillation bei 1 mbar gereinigt.

### Beispiel 9: Umsetzung von Methanphosphonigsäure mit iso-Butanol

In einem 250 ml-Dreihalskolben mit Thermometer, Wasserabescheider und Intensivrührer werden 43,8 g (0,3 mol) Methanphosphonigsäurehydroxyethylester und 37,1 g iso-Butanol (0,5 mol) vorgelegt. Bei einer Reaktionstemperatur von 80-110 °C wird das gebildete Wasser durch Azeotropdestillation entfernt. Das Produkt wird anschließend durch Destillation bei 1 mbar gereinigt

### Beispiel 10: Addition von Methanphosphonigsäureisobutylester an Acroleincyanhydrinacetat

In einem 500 ml-Fünfhalskolben mit Thermometer, Rückflußkühler, Intensivrührer und Tropftrichter werden 110g Methanphosphonigsäureisobutylester vorgelegt. Unter Rühren werden bei 130 °C während einer Stunde 50 g Acroleincyanhydrinacetat und 4 g t-Butylperoctoat dazugetropft. Dann wird noch 15 min bei 120 °C nachreagieren lassen und anschließend das Produkt im Hochvakuum bei 170 °C und 0,4 mbar abdestilliert.
Man erhält 94 g 3-Acetoxy-3-cyano-propyl)-methyl-phosphinsäureisobutylester, entsprechend einer Ausbeute von 89,5 % der Theorie.

### Beispiel 11:

### Addition von Methanphosphonigsäureisobutylester an Acroleincyanhydrinpropionat

In einem 500 ml-Fünfhalskolben mit Thermometer, Rückflußkühler, Intensivrührer und Tropftrichter werden 110 g Methanphosphonigsäureisobutylester vorgelegt. Unter Rühren werden bei 130 °C während einer Stunde 50 g Acroleincyanhydrinpropionat und 4 g t-Butylperoctoat dazugetropft. Dann wird noch 15 min bei 120 °C nachreagieren lassen und anschließend das Produkt im Hochvakuum bei 180 °C und 0,4 mbar abdestilliert.
Man erhält 94 g 3-Acetoxy-3-cyano-propyl)-methyl-phosphinsäureisobutylester, entsprechend einer Ausbeute von 84,5 % der Theorie.

## Patentansprüche

1. Verfahren zur Herstellung von Phosphinsäureestem, **dadurch gekennzeichnet, daß** man
a) elementaren gelben Phosphor mit Alkylhalogeniden in Gegenwart von Alkali- oder Erdalkalihydroxid zu einem Gemisch, welches als Hauptbestandteile die Alkaliund/oder Erdalkalisalze der Alkylphosphonigen, Phosphorigen und Hypophosphorigen Säure enthält, umsetzt
b) aus dem nach a) erhaltenen Gemisch die Alkylphosphonige Säure entfernt
c) dieAlkylphosphonige Säure verestert
d) den so erhaltenen Ester der Alkylphosphonigen Säure an eine Verbindung mit mindesetns einer C=C-Doppelbindung addiert.

2. Verfahren nach Anspruch 1, **dadurch gekennzeichnet, daß** als Alkylhalogenide Methylchlorid oder Methylbromid eingesetzt werden.

3. Verfahren nach Anspruch 1 oder 2, **dadurch gekennzeichnet, daß** man in einem organischem Lösungsmittel umsetzt.

4. Verfahren nach einem oder mehreren der Ansprüche 1 bis 3, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet werden.

5. Verfahren nach einem oder mehreren der Ansprüche 1 bis 4, **dadurch gekennzeichnet, daß** als organisches Lösungsmittel Toluol, allein oder in Kombination mit Alkoholen, verwendet wird.

6. Verfahren nach einem oder mehreren der Ansprüche 1 bis 5, **dadurch gekennzeichnet, daß** die Reaktion in Anwesenheit eines Phasen-Transfer-Katalysators durchgeführt wird.

7. Verfahren nach Anspruch 6, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

8. Verfahren nach einem oder mehreren der Ansprüche 1 bis 7, **dadurch gekennzeichnet, daß** die Temperatur bei der Reaktion -20 bis +60 °C beträgt.

9. Verfahren nach einem oder mehreren der Ansprüche 1 bis 8, **dadurch gekennzeichnet, daß** die Temperatur 0 bis 30 °C beträgt.

10. Verfahren nach einem oder mehreren der Ansprüche 1 bis 9, **dadurch gekennzeichnet, daß** die Reaktion unter einem Druck von 0 bis 10 bar durchgeführt wird.

11. Verfahren nach einem oder mehreren der Ansprüche 1 bis 10, **dadurch gekennzeichnet, daß** man den gelben Phosphor in einem Lösungsmittel oder einem Lösungsmittelgemisch suspendiert und dann mit einem Alkylhalogenid und einer Verbindung der Formel MOH oder M'(OH)₂ oder Gemischen davon, in denen M ein Alkalimetall und M' ein Erdalkalimetall bedeutet, umsetzt.

12. Verfahren nach einem oder mehreren der Ansprüche 1 bis 11, **dadurch gekennzeichnet, daß** der gelbe Phosphor und das Alkylhalogenid im molaren Verhältnis von 1:1 bis 1:3 miteinander umgesetzt werden, wobei das molare Verhältnis von gelbem Phosphor zur Verbindung der Formel MOH oder M'(OH)₂ 1:1 bis 1:5 beträgt..

13. Verfahren nach einem oder mehreren der Ansprüche 1 bis 12, **dadurch gekennzeichnet, daß** im Schritt b) die Alkylphosphonige Säure destillativ entfernt wird.

14. Verfahren nach einem oder mehreren der Ansprüche 1 bis 13, **dadurch gekennzeichnet, daß** man im Schritt c) mittels Oxethylierung verestert.

15. Verfahren nach einem oder mehreren der Ansprüche 1 bis 13, **dadurch gekennzeichnet, daß** man im Schritt c) direkt durch Umsetzung mit Alkoholen unter Wasserabspaltung verestert.

16. Verfahren nach einem oder mehreren der Ansprüche 1 bis 15, **dadurch gekennzeichnet, daß** im Schritt d) in Anwesenheit von Katalysatoren addiert wird.

17. Verfahren nach Anspruch 16, **dadurch gekennzeichnet, daß** es sich um basische Katalysatoren handelt.

18. Verfahren nach Anspruch 16 oder 17, **dadurch gekennzeichnet, daß** es sich bei den basischen Katalystoren um Alkali- und/oder Erdalkalialkoholate handelt.

19. Verfahren nach einem oder mehreren der Ansprüche 1 bis 18, **dadurch gekennzeichnet, daß** es sich bei den Verbindungen mit mindestens einer C=C-Doppelbindung um Olefine handelt.

20. Verfahren nach Anspruch 19, **dadurch gekennzeichnet, daß** es sich um Olefine mit funktionellen Gruppen handelt.

21. Verfahren nach Anspruch 20, **dadurch gekennzeichnet, daß** es sich bei den Olefinen mit funktionellen Gruppen um α,β-ungesättigte Carbonsäureester, -chloride, -amide oder -nitrile, α,β-ungesättigte Ketone sowie Alkyl-vinyl-sulfone und Carbonsäurevinylester handelt.

22. Verfahren nach Anspruch 21, **dadurch gekennzeichnet, daß** es sich bei den Olefinen mit funktionellen Gruppen um α,β-ungesättigte Carbonsäureester aliphatischer oder cycloaliphatischer Alkohole mit 1 bis 20 C-Atomen handelt oder um Carbonsäureester mehrwertiger Alkohole mit 2 bis 4 Hydroxylgruppen und 2 bis 20 C-Atomen handelt.

23. Verfahren nach einem oder mehreren der Ansprüche 1 bis 22, **dadurch gekennzeichnet, daß** es sich bei den Olefinen mit funktionellen Gruppen um Derivate der Acrylsäure nach der allgemeinen Formel (I), 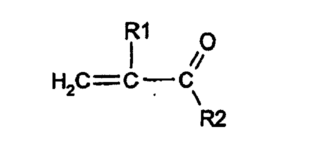 wobei R1 CH₃ oder H und R2 eine Estergruppe ein- oder mehrwertiger Alkohole mit 1-12 C-Atomen oder eine Amingruppe bedeutet, handelt.

24. Verfahren nach einem oder mehreren der Ansprüche 1 bis 22, **dadurch gekennzeichnet, daß** es sich bei den Olefinen mit funktionellen Gruppen um Acroleincyanhydrin-Verbindungen nach Formel (II) 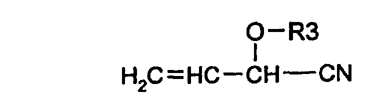 mit R3 = Acetyl oder Propionyl, handelt

25. Verfahren nach einem oder mehreren der Ansprüche 1 bis 22, **dadurch gekennzeichnet, daß** es sich bei den Olefinen mit funktionellen Gruppen um Itaconsäurederivate der allgemeinen Formel (III) mit R' = Alkylgruppe mit 1-12 C-Atomen, handelt.

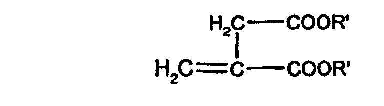

26. Verfahren nach einem oder mehreren der Ansprüche 1 bis 25, **dadurch gekennzeichnet, daß** es sich bei dem Olefin um Hydroxyethylacrylat, Acrylsäuremethylester, Acrylsäureethylester, Hydroxyethylmethacrylat, Methacrylsäuremethylester, Methacrylsäureethylester, Itaconsäuredimethylester, Itaconsäurediethylester oder Acroleincyanhydrinacetat handelt.

27. Verfahren nach einem oder mehreren der Ansprüche 1 bis 26, **dadurch gekennzeichnet, daß** es sich bei der Alkylphosphonigen Säure um Methanphosphonige Säure handelt.

28. Verwendung der nach dem Verfahren der Ansprüche 1 bis 27 hergestellten Phosphinsäureester als reaktive Flammschutzmittel für Polymere.

29. Verwendung der nach dem Verfahren der Ansprüche 1 bis 27 hergestellten Phosphinsäureester als reaktive Flammschutzmittel für thermoplastische Polymere wie Polyethylenterephthalat, Polybutylenterephthalat oder Polyamid.

30. Verwendung der nach dem Verfahren der Ansprüche 1 bis 27 hergestellten Phosphinsäureester als reaktive Flammschutzmittel für duroplastische Harze wie ungesättigte Polyesterharze, Epoxidharze, Polyurethane oder Acrylate.

## Claims

1. A process for preparing phosphinic esters which comprises
a) reacting elemental yellow phosphorus with alkyl halides in the presence of alkali metal hydroxide or alkaline earth metal hydroxide to form a mixture which comprises as main constituents the alkali metal salts and/or alkaline earth metal salts of alkylphosphonous acid, phosphorous acid and hypophosphorous acid
b) removing the alkylphosphonous acid from the mixture obtained as described in a),
c) esterifying the alkylphosphonous acid,
d) adding the resultant ester of the alkylphosphonous acid to a compound having
at least one C=C double bond.

2. The process as claimed in claim 1, wherein the alkyl halides used are methyl chloride or methyl bromide.

3. The process as claimed in claim 1 or 2, wherein the reaction is carried out in an organic solvent.

4. The process as claimed in one or more of claims 1 to 3, wherein, as organic solvent, use is made of unbranched or branched alkanes, alkyl-substituted aromatic solvents, water-immiscible or only partly water-miscible alcohols or ethers, alone or in combination with one another.

5. The process as claimed in one or more of claims 1 to 4, wherein, as organic solvent, use is made of toluene, alone or in combination with alcohols.

6. The process as claimed in one or more of claims 1 to 5, wherein the reaction is carried out in the presence of a phase-transfer catalyst.

7. The process as claimed in claim 6, wherein the phase-transfer catalyst is tetraalkylphosphonium halides, triphenylalkylphosphonium halides or tetraorganylammonium halides.

8. The process as claimed in one or more of claims 1 to 7, wherein the temperature in the reaction is -20 to +60°C.

9. The process as claimed in one or more of claims 1 to 8, wherein the temperature is from 0 to 30°C.

10. The process as claimed in one or more of claims 1 to 9, wherein the reaction is carried out at a pressure of from 0 to 10 bar.

11. The process as claimed in one or more of claims 1 to 10, wherein the yellow phosphorus is suspended in a solvent or a solvent mixture and is then reacted with an alkyl halide and a compound of the formula MOH or M'(OH)₂ or mixtures thereof, where M is an alkali metal and M' is an alkaline earth metal.

12. The process as claimed in one or more of claims 1 to 11, wherein the yellow phosphorus and the alkyl halide are reacted with one another in a molar ratio of from 1:1 to 1:3, the molar ratio of yellow phosphorus to the compound of the formula MOH or M'(OH)₂ being from 1:1 to 1:5.

13. The process as claimed in one or more of claims 1 to 12, wherein, in step b), the alkylphosphonous acid is removed by distillation.

14. The process as claimed in one or more of claims 1 to 13, wherein, in step c), esterification is performed by ethoxylation.

15. The process as claimed in one or more of claims 1 to 13, wherein, in step c), esterification is performed directly by reaction with alcohols with elimination of water.

16. The process as claimed in one or more of claims 1 to 15, wherein, in step d), addition is performed in the presence of catalysts.

17. The process as claimed in claim 16, wherein the catalysts are basic catalysts.

18. The process as claimed in claim 16 or 17, wherein the basic catalysts are alkali metal alkoxides and/or alkaline earth metal alkoxides.

19. The process as claimed in one or more of claims 1 to 18, wherein the compounds having at least one C=C double bond are olefins.

20. The process as claimed in claim 19, wherein the olefins are olefins having functional groups.

21. The process as claimed in claim 20, wherein the olefins having functional groups are α,β-unsaturated carboxylic esters, carboxylic acid chlorides, carboxamides or carbonitriles, α,β-unsaturated ketones as well as alkyl vinyl sulfones and vinyl carboxylates.

22. The process as claimed in claim 21, wherein the olefins having functional groups are α,β-unsaturated carboxylic esters of aliphatic or cycloaliphatic alcohols having from 1 to 20 carbon atoms or are carboxylic esters of polyhydric alcohols having from 2 to 4 hydroxyl groups and from 2 to 20 carbon atoms.

23. The process as claimed in one or more of claims 1 to 22, wherein the olefins having functional groups are acrylic acid derivatives according to the formula (I), 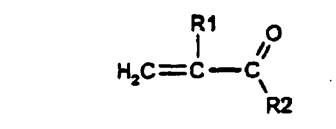 where R1 is CH₃ or H and R2 is an ester group of monohydric or polyhydric alcohols having 1-12 carbon atoms or an amine group.

24. The process as claimed in one or more of claims 1 to 22, wherein the olefins having functional groups are acroleincyanohydrin compounds according to formula (II) 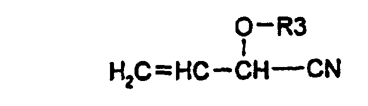 where R3 = acetyl or propionyl.

25. The process as claimed in one or more of claims 1 to 22, wherein the olefins having functional groups are itaconic acid derivatives of the formula (III) where R' = alkyl group having 1-12 carbon atoms.

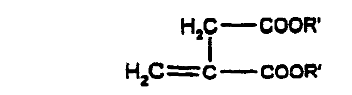

26. The process as claimed in one or more of claims 1 to 25, wherein the olefin is hydroxyethyl acrylate, methyl acrylate, ethyl acrylate, hydroxyethyl methacrylate, methyl methacrylate, ethyl methacrylate, dimethyl itaconate, diethyl itaconate or acrolein cyanohydrin acetate.

27. The process as claimed in one or more of claims 1 to 26, wherein the alkylphosphonous acid is methanephosphonous acid.

28. The use of the phosphinic esters prepared by the process of claims 1 to 27 as reactive flame retardants for polymers.

29. The use of the phosphinic esters prepared by the process of claims 1 to 27 as reactive flame retardants for thermoplastic polymers such as polyethylene terephthalate, polybutylene terephthalate or polyamide.

30. The use of the phosphinic esters prepared by the process of claims 1 to 27 as reactive flame retardants for thermosetting resins such as unsaturated polyester resins, epoxy resins, polyurethanes or acrylates.

## Revendications

1. Procédé pour la préparation d'esters de l'acide phosphinique **caractérisé en ce que**
a) on fait réagir du phosphore jaune élémentaire sur des halogénures d'alkyles en présence d'hydroxydes alcalins et/ou alcalino-terreux pour donner un mélange qui renferme en tant que constituants principaux des sels alcalins et/ou alcalino-terreux de l'acide alkylphosphoneux, de l'acide phosphoreux et de l'acide hypophosphoreux,
b) on élimine l'acide alkylphosphoneux à partir du mélange obtenu au point a),
c) on estérifie l'acide alkylphosphoneux,
d) on fixe par voie d'addition l'ester de l'acide alkylphosphoneux ainsi obtenu sur un composé ayant au moins une double liaison C=C.

2. Procédé selon la revendication 1, **caractérisé en ce qu'**on utilise en tant qu'halogénures d'alkyles le chlorure de méthyle ou le bromure de méthyle.

3. Procédé selon la revendication 1 ou 2,**caractérisé** en qu'on met en oeuvre la réaction dans un solvant organique.

4. Procédé selon une ou plusieurs des revendications 1 à 3, **caractérisé en ce qu'**on utilise comme solvants organiques des alcanes linéaires ou ramifiés, des solvants aromatiques substitués par un substituant alkyle, des alcools ou éthers non miscibles ou partiellement miscibles à l'eau, seuls ou en combinaison entre eux.

5. Procédé selon une ou plusieurs des revendications 1 à 4, **caractérisé en ce qu'**on utilise comme solvant organique le toluène seul ou en combinaison avec des alcools.

6. Procédé selon une ou plusieurs des revendications 1 à 5, **caractérisé en ce qu'**on met en oeuvre la réaction en présence d'un catalyseur de transfert de phase.

7. Procédé selon la revendication 6,
**caractérisé en ce qu'**il s'agit pour le catalyseur de transfert de phase d'halogénures de tétraalkylphosphonium, d'halogénures de triphénylalkylphosphonium ou d'halogénures de tétraorganylammonium.

8. Procédé selon une ou plusieurs des revendications 1 à 7, **caractérisé en ce que** la température réactionnelle est de -20 à +60°C.

9. Procédé selon une ou plusieurs des revendications 1 à 8, **caractérisé en ce que** la température réactionnelle est de 0 à 30°C.

10. Procédé selon une ou plusieurs des revendications 1 à 9, **caractérisé en ce que** la réaction est mise en oeuvre sous une pression de 0 à 10 bars.

11. Procédé selon une ou plusieurs des revendications 1 à 10, **caractérisé en ce qu'**on met en suspension le phosphore jaune dans un solvant ou un mélange de solvants et ensuite on fait réagir sur un halogénure d'alkyle et un composé de formule MOH ou M'(OH)₂ ou leurs mélanges, où M représente un métal alcalin et M' représente un métal alcalino-terreux.

12. Procédé selon une ou plusieurs des revendications 1 à 11, **caractérisé en ce qu'**on fait réagir le phosphore jaune et l'halogénure d'alkyle dans un rapport molaire de 1:1 à 1:3, le rapport molaire du phosphore jaune au composé de formule MOH ou M'(OH)₂ étant de 1:1 à 1:5.

13. Procédé selon une ou plusieurs des revendications 1 à 12, **caractérisé en ce qu'**on élimine l'acide alkylphosphoneux à l'étape b) par distillation.

14. Procédé selon une ou plusieurs des revendications 1 à 13, **caractérisé en ce qu'**on réalise l'estérification à l'étape c) par oxéthylation.

15. Procédé selon une ou plusieurs des revendications 1 à 13, **caractérisé en ce qu'**on estérifie à l'étape c) directement par réaction sur des alcools en éliminant l'eau.

16. Procédé selon une ou plusieurs des revendications 1 à 15, **caractérisé en ce qu'**on réalise la fixation par voie d'addition à l'étape d) en présence de catalyseurs.

17. Procédé selon la revendication 16, **caractérisé en ce qu'**il s'agit de catalyseurs basiques.

18. Procédé selon la revendication 16 ou 17, **caractérisé en ce qu'**il s'agit pour les catalyseurs basiques d'alcoolates alcalins et/ou alcalino-terreux.

19. Procédé selon une ou plusieurs des revendications 1 à 18, **caractérisé en ce que** pour les composés ayant au moins une double liaison C=C, il s'agit d'oléfines.

20. Procédé selon la revendication 19, **caractérisé** en qu'il s'agit d'oléfines présentant des groupes fonctionnels.

21. Procédé selon la revendication 20, **caractérisé** que pour les oléfines présentant des groupes fonctionnels, il s'agit d'esters, de chlorures d'amides ou de nitriles d'acides carboxyliques insaturés en α,β, de cétones insaturés en α,β ainsi que des alkylvinylsulfones et d'un ester vinylique d'acide carboxylique.

22. Procédé selon la revendication 21, **caractérisé en ce que** pour les oléfines présentant des groupes fonctionnels, il s'agit d'esters d'acides carboxyliques insaturés en α,β, d'alcools aliphatiques ou cycloaliphatiques présentant 1 à 20 atomes de carbone ou d'esters d'acides carboxyliques d'alcools multifonctionnels présentant 2 à 4 groupes hydroxyle et 2 à 20 atomes de carbone.

23. Procédé selon une ou plusieurs des revendications 1 à 22, **caractérisé en ce qu'**il s'agit pour les oléfines avec des groupes fonctionnels de dérivés de l'acide acrylique selon la formule générale (I) 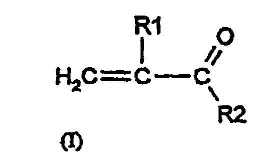 R1 représente un groupe CH₃ ou un atome d'hydrogène et R2 représente un groupe ester d'alcools mono- ou multifonctionnels présentant de 1 à 12 atomes de carbone ou un groupe amino.

24. Procédé selon une ou plusieurs des revendications 1 à 22, **caractérisé** en que pour les oléfines présentant des groupes fonctionnels, il s'agit de composés d'acroléinecyanhydrine de formule (II) 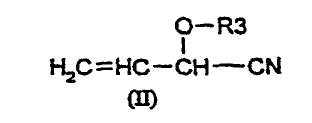 où R³ = acétyle ou propionyle.

25. Procédé selon une ou plusieurs des revendications 1 à 22, **caractérisé en ce que** pour les oléfines présentant des groupes fonctionnels, il s'agit de dérivés de l'acide itaconique de formule générale (III) où R' = un groupe alkyle présentant 1 à 12 atomes de carbone.

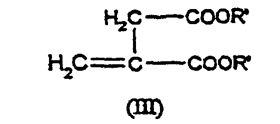

26. Procédé selon une ou plusieurs des revendications 1 à 25, **caractérisé en ce que** pour l'oléfine, il s'agit de l'acrylate d'hydroxyéthyle, de l'acrylate de méthyle, de l'acrylate d'éthyle, du méthacrylate d'hydroxyéthyle, du méthacrylate de méthyle, du méthacrylate d'éthyle, de l'itaconate de diméthyle, de l'itaconate de diéthyle ou de l'acétate d'acroléinecyanhydrine.

27. Procédé selon la revendication 1 à 26, **caractérisé** en ce qui concerne l'acide alkylphosphoneux, il s'agit d'acide méthanephosphoneux.

28. Utilisation des esters de l'acide phosphinique préparés selon le procédé des revendications 1 à 27, en tant qu'agents ignifugeants réactifs pour des polymères.

29. Utilisation des esters de l'acide phosphinique préparés selon le procédé des revendications 1 à 27, en tant qu'agents ignifugeants réactifs pour des polymères thermoplastiques, tels que le poly(téréphtalate d'éthylène), le poly(téréphtalate de butylène ou le polyamide.

30. Utilisation des esters de l'acide phosphinique préparés selon le procédé des revendications 1 à 27, en tant qu'agents ignifugeants réactifs pour des résines thermodurcissables, telles que des résines polyesters insaturées, des résines époxydes, des polyuréthannes ou acrylates.
